# FASCICULE DE BREVET EUROPEEN

(11) **EP 3 617 888 B1**
(45) Date de publication et mention de la délivrance du brevet: **07.07.2021**
(21) Numéro de dépôt: 19177528.7
(22) Date de dépôt: 30.05.2019
(51) Int. Cl.: G06F 11/34

(54) **DISPOSITIF ET PROCEDE POUR L'OPTIMISATION DE L'UTILISATION DANS LE TEMPS DES RESSOURCES D'UNE INFRASTRUCTURE INFORMATIQUE**
VORRICHTUNG UND VERFAHREN ZUR OPTIMIERUNG DER ZEITLICHEN VERWENDUNG DER RESSOURCEN EINER IT-INFRASTRUKTUR
DEVICE AND METHOD FOR OPTIMISING THE USE OVER TIME OF THE RESOURCES OF A COMPUTER INFRASTRUCTURE

(30) Priorité: 31.08.2018 FR 1854716
(43) Date de publication de la demande: 04.03.2020
(73) Titulaire: BULL SAS, 78340 Les Clayes sous Bois (FR)
(72) Inventeur: DEMEILLIEZ, Bruno, 38380 Saint Laurent du Pont (FR); GERMAIN, Christophe, 38100 Grenoble (FR); ALVAREZ MARCOS, Jose Ignacio, 69220 Saint Jean d'Ardières (FR)
(74) Mandataire: Cabinet Camus Lebkiri

(56) Documents cités:
- EP-A1- 3 113 025
- US-A1- 2009 007 132
- US-A1- 2014 282 503
- US-B1- 8 620 921
- VINCENT C EMEAKAROHA ET AL: "Low level Metrics to High level SLAs - LoM2HiS framework: Bridging the gap between monitored metrics and SLA parameters in cloud environments", HIGH PERFORMANCE COMPUTING AND SIMULATION (HPCS), 2010 INTERNATIONAL CONFERENCE ON, IEEE, PISCATAWAY, NJ, USA, 28 juin 2010 (2010-06-28), pages 48-54, XP031731503, ISBN: 978-1-4244-6827-0

## Description

L'invention concerne le domaine de la surveillance des performances des infrastructures informatiques et plus particulièrement celui de l'amélioration des performances des systèmes en production. L'invention porte notamment sur un procédé d'optimisation de l'utilisation dans le temps des ressources d'une infrastructure informatique en production et un dispositif apte à mettre en œuvre ledit procédé.

### [Art antérieur]

Les infrastructures informatiques représentent une grande partie de l'investissement d'une entreprise. Leur bonne gestion est un enjeu stratégique pour pouvoir maîtriser leurs coûts, mais également pour garantir un accès fiable et optimisé aux différentes données métiers du système d'information.

Au fil du temps, les administrateurs de systèmes d'information font généralement évoluer leur infrastructure informatique de façon à toujours proposer des services applicatifs métiers performants et adaptés à la demande de leur organisation. Par exemple, suite à une augmentation d'un certain groupe d'utilisateurs, il peut y avoir une augmentation de la consommation des ressources par certaines applications métiers et donc il peut être avantageux de réorganiser cette infrastructure informatique. Alternativement, un changement de briques applicatives, une modification d'une brique applicative entrainant une réduction de sa consommation de ressource, ou encore une amélioration d'une infrastructure informatique peuvent entrainer une augmentation des ressources disponibles. Il existe des procédés de mesures de performance (« Benchmark » en terminologie anglo-saxonne) ayant pour objectif de dimensionner, en fonction d'une utilisation donnée, une nouvelle infrastructure informatique hébergeant une chaine applicative et d'en valider les performances et l'endurance.

Néanmoins, ces systèmes paraissent aujourd'hui insuffisants. En effet, lorsqu'une application est en production sur une infrastructure informatique, elle peut connaitre des évolutions importantes d'utilisation (i.e charge) dans le temps avec des variations dans la journée (plages horaires de travail *versus* reste de la journée), dans la semaine (mercredi journée de congé pour certains salariés, jours de repos *versus* jours travaillé), dans le mois et l'année (période de clôture mensuelle, trimestrielle, annuelle, etc).

Ces variations d'utilisation se traduisent concrètement au niveau matériel par des variations similaires de besoins en ressources. Ainsi, les administrateurs de systèmes d'information doivent également faire face à des variations de l'utilisation des ressources dans le temps, formant des périodes de contraintes plus ou moins fortes sur les infrastructures informatiques.

À ce jour, des solutions existent, permettant à travers des portails de surveiller l'utilisation des ressources et de les comparer à des niveaux de services applicatifs. Cette analyse automatique peut générer des alertes envoyées au responsable d'exploitation qui devra décider des actions correctives éventuelles à entreprendre. Par exemple, il a été proposé (US8,620,921) un modèle de prédiction de stockage de données capable, lorsqu'une violation d'un niveau de service a lieu, de spécifier où le stockage peut avoir lieu. Mais aucune de ces solutions ne génère actuellement des préconisations d'évolutions de l'infrastructure. C'est au responsable d'exploitation de déduire des alertes les évolutions qu'il convient de faire. Récemment, il a été proposé (EP3113025) un système automatisé qui surveille l'ensemble des serveurs qui composent une chaîne de liaison et qui, par analyse des métriques, permet d'élaborer, par anticipation, des propositions de redimensionnement de la chaîne de liaison en rapport avec la charge applicative. Un tel système, qui mentionne des types d'évolution, est en particulier proposé de façon à anticiper les ajustements d'infrastructure nécessaires pour accélérer la réponse aux incidents entrainant une dégradation voire une interruption des services délivrés par l'application.

Ce système comporte : - Un module de mémorisation apte à mémoriser une pluralité de référentiels incluant: o Un référentiel du niveau d'utilisation d'une structure informatique; o Un référentiel de profils applicatifs configuré pour mémoriser des données d'identification de la ou des structures informatiques utilisées par une brique applicative et une donnée correspondant à un indicateur de criticité de ladite brique applicative; o Un référentiel d'infrastructure informatique configuré pour mémoriser des caractéristiques de ressources serveurs pour au moins une structure informatique de l'infrastructure informatique; o Un référentiel de ressources configuré pour mémoriser des caractéristiques de ressources lesdites caractéristiques de ressources comportant des données de quantité décrivant les ressources utilisées; o Un référentiel de règles d'exécution configuré pour mémoriser des données correspondant à des niveaux maximums d'utilisation de ressources; - Un module d'analyse d'informations collectées apte à calculer pour une période de temps, des niveaux de ressources nécessaires; - Un module de sélection des structures informatiques configuré pour, à partir des niveaux de ressources nécessaires calculés et des données du référentiel d'infrastructure informatique, sélectionner des structures informatiques nécessaires à la période de temps ; et - Un module d'optimisation configuré pour générer, à partir de la sélection des structures informatiques et des données du référentiel de règles d'exécution. Néanmoins, ce système ne permet pas de proposer de façon spécifique les évolutions matérielles à mettre en œuvre par l'administrateur pour répondre aux besoins en ressources identifiés qui puissent être aisément mises en œuvre.

Alors, faute d'outillage et de temps, les administrateurs des applications dimensionnent les serveurs utilisés par ces applications afin de garantir un bon niveau de SLA (pour « Service Level Agreement » selon une terminologie anglo-saxonne) pendant les périodes de pointes (donc d'utilisation maximum) ce qui fait qu'à un instant donné, une partie plus ou moins importante des ressources n'est pas utilisée alors qu'une autre est très ou trop sollicitée.

Ainsi, il existe un besoin pour de nouvelles méthodes ou dispositifs permettant de gérer une infrastructure informatique de façon à ce qu'elle dispose d'une quantité de ressource qui soit adaptée au juste besoin des applications du système d'information (SI).

### [Problème technique]

L'invention a donc pour but de remédier aux inconvénients de l'art antérieur. En particulier, l'invention a pour but de générer de façon automatisée un plan d'évolution des ressources d'une infrastructure informatique. Ainsi, l'invention présente l'avantage de faciliter l'adaptation de l'infrastructure informatique aux besoins des applications métiers. Par exemple, le dispositif selon l'invention permet de fournir à un administrateur SI un plan de placement et un plan d'évolution indiquant les ressources à modifier pour répondre, de préférence aisément, aux besoins des application métiers pour la période à venir. Ainsi, la présente invention vise à optimiser, par périodes, l'utilisation des ressources d'une infrastructure informatique notamment en allouant les ressources disponibles de façon optimale. Un tel plan d'évolution de l'infrastructure pour la prochaine période permet de minimiser le nombre de serveurs utilisés et peut avantageusement équilibrer les consommations sur les différents serveurs afin d'améliorer leur résilience.

### [Brève description de l'invention]

A cet effet, l'invention telle que définie dans la revendication 1 porte sur un dispositif pour l'optimisation de l'utilisation des ressources sur une infrastructure informatique, l'infrastructure informatique comportant une ou plusieurs structures informatiques hébergeant une pluralité de briques applicatives, ledit dispositif comportant :
- Un module de mémorisation apte à mémoriser une pluralité de référentiels incluant :
   ∘ Un référentiel de gestion de la capacité configuré pour mémoriser au moins deux périodes de temps associées à des besoins en ressources différents,
   ∘ Un référentiel de profils applicatifs configuré pour mémoriser, de préférence pour chaque brique applicative, des données d'identification de la ou des structures informatiques utilisées par une brique applicative et une donnée correspondant à un indicateur de criticité de ladite brique applicative,
   ∘ Un référentiel d'infrastructure informatique configuré pour mémoriser des caractéristiques de ressources serveurs pour au moins une structure informatique de l'infrastructure informatique, lesdites caractéristiques de ressources serveurs comportant une donnée de règles d'évolution ainsi qu'une donnée correspondant à un indicateur de complexité d'évolution,
   ∘ Un référentiel de ressources disponibles configuré pour mémoriser des caractéristiques de ressources disponibles, lesdites caractéristiques de ressources disponibles comportant des données de quantité disponible ainsi qu'une donnée correspondant à un indicateur de complexité de mise à disposition de la ressource, et
   ∘ Un référentiel de règles d'exécution configuré pour mémoriser des données correspondant à des niveaux maximums d'utilisation de ressources ;
- Un module de planification de charge apte à calculer pour une période de temps, à partir des données du référentiel de gestion de la capacité et du référentiel de profils applicatifs, des niveaux de ressources nécessaires ;
- Un module de sélection des structures informatiques configuré pour, à partir des niveaux de ressources nécessaires calculés et des données du référentiel d'infrastructure informatique et du référentiel de ressources disponibles, sélectionner des structures informatiques nécessaires à la période de temps ; et
- Un module d'optimisation configuré pour générer, à partir de la sélection des structures informatiques nécessaires à la période de temps et des données du référentiel de règles d'exécution, au moins un plan de placement comportant des données de structures informatiques à utiliser et au moins un plan d'évolution listant des modifications de ressources à effectuer.

Le dispositif selon l'invention permet d'optimiser l'utilisation de ressources d'une infrastructure informatique. Il permet notamment, de façon rapide et automatique, de générer un plan d'évolution listant les modifications de ressources à effectuer pour mettre l'infrastructure informatique dans des conditions optimales pour une période d'activité donnée. Il est capable de rapidement déterminer quelles ressources pourraient être diminuées ou augmentée sur l'infrastructure informatique et le déploiement des briques applicatives de façon à conserver une qualité de service à un niveau souhaité. Avantageusement, il alloue les ressources disponibles de façon optimale avec pour objectif de minimiser le nombre de serveurs utilisés et d'équilibrer les consommations sur les différents serveurs afin d'améliorer leur résilience.

**Selon d'autres caractéristiques optionnelles du dispositif :**
- il comporte en outre un catalogue de plans configuré pour stocker une pluralité de plans de placement et/ou d'évolution. La présence d'un tel catalogue donne la possibilité au dispositif de stocker puis de sélectionner, via un module de sélection, un plan préexistant et donc de réduire le temps de préparation de l'optimisation ;
- le référentiel de gestion de la capacité comporte en outre une donnée correspondant à un coefficient de fiabilité des besoins en ressources. Un tel coefficient de fiabilité permet de prendre en compte au moins une partie de la variabilité de la consommation des ressources des chaines applicatives dans le temps en fonction des circonstances ;
- la donnée de règles d'évolution est sélectionnée parmi le minimum de la ressource, le maximum de la ressource et/ou le pas d'évolution de la ressource. Ainsi, le dispositif dispose de données lui permettant de déterminer quelles évolutions préconiser en fonction des besoins en ressources ;
- le référentiel de ressources disponibles comporte en outre une donnée correspondant à un indicateur de compatibilité. L'indicateur de compatibilité permet de déterminer sur quelle structure informatique la ressource disponible pourra être installée, ajoutée ou modifiée. Par exemple, il permet de déterminer sur quelle structure informatique la ressource disponible pourra être installée ;
- le module de sélection des structures informatique est configuré pour générer en outre une liste de ressources nécessaires à la période de temps à partir notamment des données correspondant à des niveaux d'utilisation des ressources sur les structures informatiques, sur la période en cours. Ainsi, il est possible de générer une liste des structures informatiques qui devront être utilisées afin de mettre à disposition l'ensemble des ressources nécessaires aux briques applicatives pour la prochaine période ;
- le module d'optimisation est configuré pour générer au moins un plan de placement présentant des consommations de ressources homogénéisées entre différentes structures informatiques. Ainsi, la consommation prévue de ressources est homogénéisée entre les différentes structures informatiques impliquées et la résilience de l'infrastructure informatique en est améliorée ;
- le module d'optimisation est configuré pour générer une pluralité de plans de placement et de plans d'évolution et pour sélectionner un plan de placement et un plan d'évolution. Cela permet une meilleure homogénéisation de l'utilisation des ressources.

L'invention telle que définie dans la revendication 14 porte en outre sur un procédé pour l'optimisation de l'utilisation des ressources d'une infrastructure informatique, ledit procédé étant mis en œuvre de préférence par un dispositif d'optimisation selon l'une quelconque des revendications de dispositif, et ledit procédé comportant les étapes suivantes :
- Calcul, par le module de planification de charge, de niveaux de ressources nécessaires pour une période de temps, à partir des données du référentiel de gestion de la capacité et du référentiel de profils applicatifs ;
- Sélection, par un module de sélection des structures informatiques, des structures informatiques nécessaires à la période de temps, à partir des niveaux de ressources nécessaires calculés et des données du référentiel d'infrastructure informatique et du référentiel de ressources disponibles ;
- Génération, par un module d'optimisation, d'au moins un plan de placement comportant des données de structures informatiques à utiliser et au moins un plan d'évolution listant des modifications de ressources à effectuer, à partir de la sélection de structures informatiques et des données du référentiel de règles d'exécution.

Le procédé selon l'invention permet d'optimiser l'utilisation de ressources d'une infrastructure informatique. Il permet notamment, de façon rapide et automatique, de générer un plan d'évolution listant les modifications de ressources à effectuer pour mettre l'infrastructure informatique dans des conditions optimales pour une période d'activité donnée. Il est capable de rapidement déterminer quelles ressources pourraient être diminuées ou augmentée sur l'infrastructure informatique et le déploiement des briques applicatives de façon à conserver une qualité de service à un niveau souhaité.

En outre, selon une caractéristique optionnelle du procédé, il comporte en outre une étape de surveillance de l'infrastructure informatique de façon à déterminer si les règles d'exécution sont respectées. Cela peut également comprendre une étape de détermination du respect des niveaux de services proposés par l'infrastructure informatique.

D'autres avantages et caractéristiques de l'invention apparaitront à la lecture de la description suivante donnée à titre d'exemple illustratif et non limitatif, en référence aux Figures annexées qui représentent :
- Figure 1, un calendrier de la consommation en ressource sur les mois de janvier (J) et de février (F) de deux chaines applicatives.
- Figure 2, une vue schématique des éléments du dispositif d'optimisation de l'utilisation des ressources d'une infrastructure informatique selon un mode de réalisation de l'invention.
- Figure 3, une représentation schématique d'un procédé d'optimisation de l'utilisation des ressources selon l'invention. Les étapes encadrées par des pointillés sont facultatives.

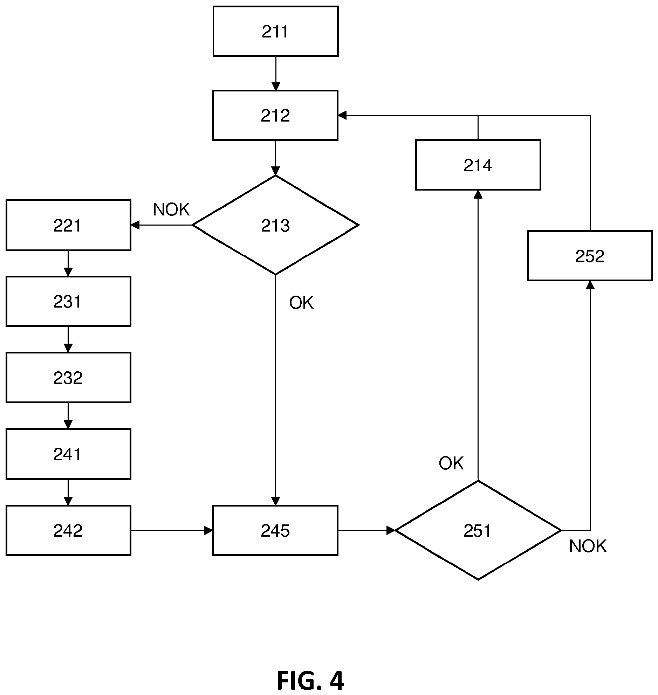

- Figure 4, une vue schématique d'un procédé d'optimisation selon un mode de réalisation de l'invention.

### [Description de l'invention]

Dans la suite de la description, on entend par « Ressource » ou «Ressource matérielle », des paramètres, des capacités ou des fonctions de dispositifs informatiques permettant le fonctionnement d'une brique applicative, d'une application ou d'une chaine applicative. Un même dispositif informatique est associé généralement à plusieurs ressources. De même, une même ressource est généralement partagée entre plusieurs chaines applicatives. Par exemple, le terme « ressource » peut inclure : des disques réseaux caractérisé par exemple par leurs entrées/sorties, la lecture/écriture sur des disques, le taux d'utilisation de la mémoire, un réseau caractérisé par sa bande passante, un processeur caractérisé par exemple par son utilisation (en pourcent) ou le taux d'occupation de ses caches, une mémoire vive caractérisée par la quantité allouée, ou de façon plus globale le temps de latence d'un processus ou les pertes de paquets. Il n'est pas nécessaire de suivre toutes les ressources d'une infrastructure informatique pour mettre en œuvre le procédé selon l'invention et il est possible de former un groupe de ressources critiques dont l'utilisation est particulièrement importante. On entend par « utilisation des ressources », la consommation d'une ressource par exemple par une application métier.

Par « niveau d'une ressource » ou « niveaux de ressources », on entend au sens de l'invention une quantité de ressource. Par exemple, cela peut correspondre pour des disques réseaux au nombre de disques réseaux disponibles ou à la quantité de mémoire disponible sur ces disques réseaux, pour un processeur, au nombre de cœurs ou au nombre de processeurs ou à la dimension des caches, pour une mémoire vive, à la quantité disponible, et pour des ports, le nombre de ports pouvant être ouverts simultanément. Le niveau initial d'une ressource correspond à la quantité de ressource disponible sur l'infrastructure informatique pour la ou les chaines applicatives. Le « pas d'une ressource » peut être d'une part la quantité minimale de ressource pouvant être ajoutée ou soustraite lors d'une étape de modification et d'autre part un multiple de la modification pouvant subir le niveau de ladite ressource. Certaines ressources présentent une granulométrie élevée (e.g. serveurs) alors que d'autre présentent une granulométrie faible (e.g. mémoire vive disponible).

Par « niveau d'utilisation d'une ressource », on entend au sens de l'invention une valeur représentative de la consommation ou de l'occupation de ladite ressource lors du fonctionnement d'une chaine applicative. Par exemple, la valeur d'utilisation peut correspondre pour des disques réseaux à leurs entrées/sorties, la lecture/écriture sur des disques, le taux d'utilisation de la mémoire, pour un réseau à sa bande passante, pour des processeurs à leur utilisation (en pourcent) ou au taux d'occupation des caches, pour de la mémoire vive la quantité utilisée et pour des ports, le nombre de ports ayant été ouverts simultanément lors du fonctionnement du procédé. La valeur d'utilisation est avantageusement ramenée au pourcentage du niveau de la ressource.

Par « seuil prédéterminé d'utilisation maximum », on entend au sens de l'invention une valeur maximale de paramètre associé à chaque ressource permettant un bon fonctionnement de ladite ressource. Par exemple, cela correspond aux limites maximales acceptables de consommations de ressources pour une structure informatique hébergeant une ou plusieurs briques applicatives. Ces limites peuvent être réelles ou hypothétiques et correspondent généralement un niveau d'utilisation au-delà duquel des dysfonctionnements peuvent survenir et ayant pour conséquence un arrêt de la ressource, de la structure informatique ou bien à tout le moins des baisses de qualités de service. Ce seuil peut être prédéterminé par un utilisateur via un fichier de configuration et une Interface Homme-Machine (IHM). Le terme « dysfonctionnement » au sens de l'invention correspond à la survenue d'un incident matériel ou d'une congestion sur la structure informatique hébergeant une brique applicative.

Par exemple, le tableau 1 ci-dessous présente les seuils prédéterminés d'utilisation maximum pour trois ressources.

**Tableau 1**

| | CPU1 | Utilisation réseau | Utilisation Disque |
|---|---|---|---|
| Seuil prédéterminé d'utilisation maximum | 80% | 350 KBps | 60 o/s |

L'expression « qualité de service » ou niveau de service au sens de l'invention correspond à une appréciation de la qualité du service rendu par une chaine applicative. L'expression « paramètre de qualité de service » au sens de l'invention correspond à des critères subjectifs ou objectifs tels que des temps de latence d'un processus, des pertes de paquets, des débits, des valeurs d'utilisation de ressources et des temps de réponse par requête. Ainsi, il y a généralement une pluralité de paramètres de qualité de service. Il peut notamment y avoir un temps de réponse seuil différent pour chacune des requêtes différentes ou bien un temps de réponse global.

L'expression « seuil prédéterminé de paramètre de qualité de service » au sens de l'invention correspond à une valeur de paramètre à laquelle peut s'engager un tiers afin de garantir de bonnes performances pour les applications critiques d'une organisation et tel que cela peut être défini dans un accord de niveau de service (SLA pour « Service-level agreement »). Par exemple, un seuil peut être du type : tous les temps de réponses sont à moins de 3 secondes. Néanmoins, il peut être avantageux de disposer de seuils détaillés en fonction des actes métiers. Par exemple, une requête mettant en œuvre une impression de fichier peut présenter un seuil de temps de réponse plus élevé qu'une requête comportant l'affichage d'une page internet. Les seuils prédéterminés de paramètres de qualité de service peuvent inclure également des seuils prédéterminés maximum d'utilisation. Dans le cadre de l'invention, une ressource critique est une ressource pour laquelle une diminution de son niveau de ressource ou un dépassement du seuil prédéterminé d'utilisation maximum entrainerait un impact important sur un ou plusieurs niveaux de service de briques applicatives.

Par « infrastructure informatique », on entend au sens de l'invention un ensemble de structures informatiques (i.e. dispositifs informatiques) apte à faire fonctionner une application ou une chaine applicative. La structure informatique peut être un serveur et peut par exemple être composée d'un serveur de présentation, d'un serveur métier et d'un serveur de données. L'infrastructure informatique peut également être un serveur test avec les mêmes ressources qu'un serveur de production ou bien un clone d'un serveur virtuel de production. De façon préférée, la structure informatique est un serveur.

L'expression « chaine applicative » au sens de l'invention correspond à un ensemble d'applications, reliées entre elles par un flot d'information et visant à proposer, au travers de plusieurs processus, une ou plusieurs fonctionnalités pouvant faire l'objet d'un accord de niveau de service. L'expression « brique applicative » au sens de l'invention correspond à une composante d'une application. La combinaison de briques applicatives est souvent nécessaire pour le fonctionnement d'applications, notamment d'applications métier, comme par exemple une application Web, une plateforme de partage de contenu ou une plateforme de calcul. Les briques applicatives de l'infrastructure informatique incluent, par exemple, un serveur ftp, un serveur de messagerie électronique, un serveur d'application Java et/ou une ou plusieurs bases de données.

Par « sonde » ou « sonde informatique », on entend au sens de l'invention un logiciel associé à un équipement qui permet d'effectuer, de gérer et faire remonter vers un équipement informatique des mesures destinées à informer entre autres de l'état de fonctionnement des ressources ou de niveau de service.

On entend par « traiter », « calculer », « déterminer », « afficher », « extraire » « comparer » ou plus largement « opération exécutable », au sens de l'invention, une action effectuée par un dispositif ou un processeur sauf si le contexte indique autrement. À cet égard, les opérations se rapportent à des actions et / ou des processus d'un système de traitement de données, par exemple un système informatique ou un dispositif informatique électronique, qui manipule et transforme les données représentées en tant que quantités physiques (électroniques) dans les mémoires du système informatique ou d'autres dispositifs de stockage, de transmission ou d'affichage de l'information. Ces opérations peuvent se baser sur des applications ou des logiciels.

Les termes ou expressions « application », « logiciel », « code de programme », et « code exécutable » signifient toute expression, code ou notation, d'un ensemble d'instructions destinées à provoquer un traitement de données pour effectuer une fonction particulière directement ou indirectement (e.g. après une opération de conversion vers un autre code). Les exemples de code de programme peuvent inclure, sans s'y limiter, un sous-programme, une fonction, une application exécutable, un code source, un code objet, une bibliothèque et/ou tout autre séquence d'instructions conçues pour l'exécution sur un système informatique.

On entend par « processeur », au sens de l'invention, au moins un circuit matériel configuré pour exécuter des opérations selon des instructions contenues dans un code. Le circuit matériel peut être un circuit intégré. Des exemples d'un processeur comprennent, sans s'y limiter, une unité de traitement central, un processeur graphique, un circuit intégré spécifique à l'application (ASIC) et un circuit logique programmable.

On entend par « couplé », au sens de l'invention, connecté, directement ou indirectement avec un ou plusieurs éléments intermédiaires. Deux éléments peuvent être couplés mécaniquement, électriquement ou liés par un canal de communication.

Dans la suite de la description, les mêmes références sont utilisées pour désigner les mêmes éléments.

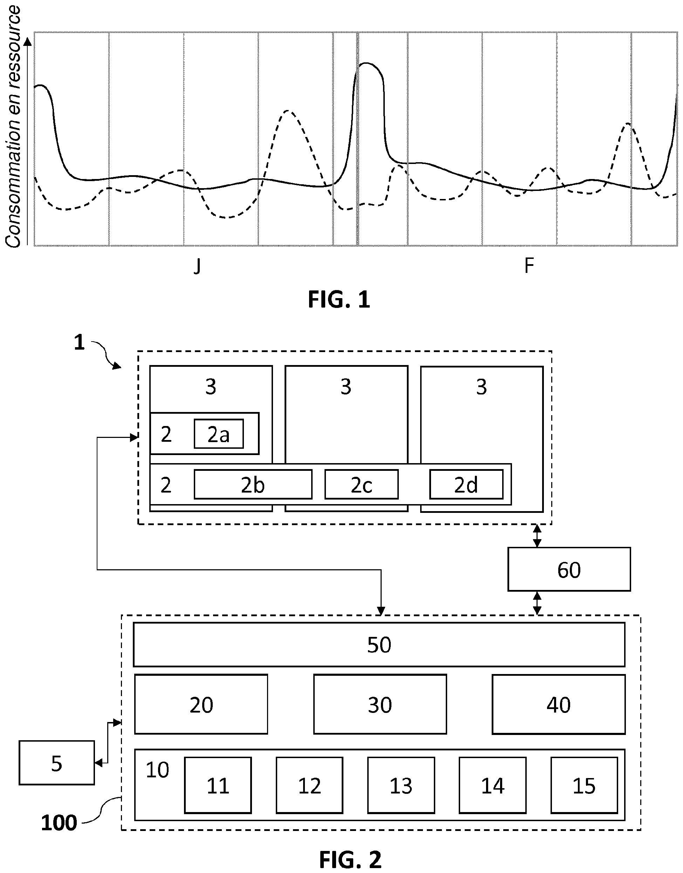

La **Figure 1** illustre une évolution possible, sur deux mois (janvier - J et février - F), de la consommation en ressources (ici le taux d'occupation du CPU) de deux chaines applicatives hébergées par une infrastructure informatique. Dans cet exemple, la consommation de ressources par une première application représentée par la courbe en trait plein, est plus forte en début de mois tandis que la consommation de ressources par une seconde application représentée par la courbe en pointillés, est plus forte en fin de mois. Cette figure illustre les variations auxquelles sont confrontés les administrateurs SI lors de la gestion des infrastructures. De façon à gérer dans le temps les variations de besoins en ressources des chaines applicatives, il est fréquent que les infrastructures informatiques comportent des ressources permettant de répondre, en permanence, aux maxima observés. Ainsi, il existe un gaspillage important de ressources lors de périodes de faible activité et il peut survenir des perturbations de fonctionnement si les besoins viennent à évoluer.

De façon à améliorer l'efficience des infrastructures, il est souhaitable de pouvoir faire évoluer périodiquement leurs ressources de façon à ce qu'elles répondent aux besoins des chaines applicatives pour une période donnée. Pour cela, les inventeurs ont développé un **nouveau dispositif 100 pour l'optimisation de l'utilisation des ressources d'une infrastructure informatique.** Ce dispositif permet avantageusement de générer un plan d'optimisation comportant d'une part des données de structures informatiques (e.g. serveurs) à utiliser et d'autre part des données d'évolution des ressources à mettre en œuvre. Ainsi, contrairement aux dispositifs ou systèmes de l'art antérieur, l'administrateur SI sait pour une période donnée quelle est le placement à mettre en œuvre et quelles sont les modifications de ressources (e.g. modifications matérielles) à effectuer. En particulier, en se basant sur une pluralité de référentiels, ce dispositif est configuré pour planifier la charge sur une période donnée, sélectionner les structures informatiques (e.g. serveurs d'infrastructure) à utiliser et prévoir les évolutions matérielles à effectuer ainsi que le placement (i.e. déploiement) des chaines applicatives. La **figure 2** illustre schématiquement une représentation fonctionnelle non limitative d'un mode de réalisation selon l'invention d'un tel dispositif.

Ce dispositif 100 est connecté à une **infrastructure informatique** 1 alternativement, il peut être intégré à ladite infrastructure informatique 1. L'infrastructure informatique 1 est plus particulièrement une infrastructure informatique en production dont les ressources sont utilisées par des **chaines 2 applicatives** constituées de briques applicatives 2a, 2b, 2c, 2d. Lorsque l'on prête une action au dispositif selon l'invention celle-ci est en fait effectuée par un microprocesseur du dispositif commandé par des codes instructions enregistrés dans une mémoire du dispositif 100. Si l'on prête une action à une application, celle-ci est en fait effectuée par un microprocesseur du dispositif 100 dans une mémoire duquel les codes instructions correspondant à l'application sont enregistrés. Lorsque le dispositif 100 selon l'invention émet ou reçoit un message, ce message est émis ou reçu par une interface de communication du dispositif 100.

La **figure 2** illustre schématiquement un mode de réalisation d'un dispositif 100 pour l'optimisation de l'utilisation des ressources d'une infrastructure informatique 1 par des chaines applicatives 2. Ce dispositif peut notamment comprendre au moins une machine informatique et un logiciel pour mettre en œuvre le procédé pour l'optimisation selon l'invention.

Sur la figure 2 est en outre affiché un terminal utilisateur 5 via lequel, un utilisateur peut interagir, par exemple par l'intermédiaire d'un réseau de communication, avec le dispositif 100 selon l'invention. Le terminal utilisateur 5 est un ordinateur, une tablette numérique, un téléphone portable, ou plus généralement tout dispositif permettant à un utilisateur d'émettre des requêtes, via un réseau de communication (par exemple LAN, WLAN, ou PAN, journal d'une base de données, courriel), vers le dispositif 100 pour l'optimisation de l'utilisation des ressources. A cet égard, le terminal utilisateur 5 peut être pourvu d'une application cliente permettant d'envoyer des requêtes ou des instructions au dispositif 100 d'optimisation de l'utilisation des ressources et d'en interpréter les réponses. Cette application cliente est, par exemple, un navigateur Web FireFox ®, Fennec ®, Opéra ®, Opéra Mobile ®, Internet Explorer®, Google Chrome® par exemple, ou un navigateur ftp (tel que FileZilla®).

L'infrastructure informatique 1 peut comporter une pluralité de structures 3 informatiques telles que des serveurs. Chacune des structures 3 informatiques peut héberger une ou plusieurs chaines applicatives 2. Le terminal utilisateur 5 est, en outre, configuré pour recevoir, depuis les structures 3 informatiques une réponse à sa requête. Ces requêtes/réponses se font dans le cadre d'actes métier initiés par l'utilisateur afin de bénéficier d'un service applicatif fourni par la chaine applicative qui est déployée sur l'infrastructure informatique 1. Les chaines applicatives 2 sont mises à disposition par l'une des structures 3 informatique sur demande depuis le terminal utilisateur 5. Les services proposés par les chaines applicatives 2 peuvent comprendre, par exemple, un service de courriel, un service d'agenda, la navigation dans un système d'information, un service d'interrogation de bases de données en ligne, un service d'enseignement à distance, un service de vente et/ou de réservation en ligne, un service de remplissage et de soumission d'un formulaire électronique, un service de streaming, un service de téléchargement et/ou de chargement de contenus.

Chaque structure 3 informatique peut comprendre un microprocesseur, des moyens de stockage (tel qu'un disque dur qu'il soit local ou distant), et une interface de communication (par exemple une interface réseau de type Ethernet, FiberChannel, InfiniBand...). En particulier, une structure 3 informatique peut être un serveur physique ou un serveur virtuel.

Le dispositif 100 selon l'invention comporte notamment un module de mémorisation 10 apte à mémoriser une pluralité de référentiels. Le module de mémorisation 10 peut comprendre une mémoire transitoire et/ou une mémoire non transitoire. La mémoire non transitoire peut être un support tel qu'un CDrom, une carte mémoire, un disque dur local ou un disque dur hébergé par un serveur distant. De préférence, le module de mémorisation 10 prend la forme d'un disque dur local. Le module de mémorisation 10 est notamment apte à enregistrer, par exemple sous la forme d'un ou plusieurs fichiers, des données générées par une IHM ou par des sondes de consommation ou encore des données acquises par l'intermédiaire d'un module de communication. Ces données peuvent par exemple correspondre à des données relatives aux capacités de l'infrastructure 1 informatique, aux besoins des chaines applicatives, aux ressources disponibles ou encore à des paramètres de fonctionnement prédéterminés ou à des périodes de temps (e.g. d'activités) identifiées.

Le module de mémorisation 10 comporte notamment un **référentiel 11 de gestion de la capacité.** Un tel référentiel 11 permet notamment de mémoriser l'évolution de différentes métriques liées à l'utilisation des ressources (processeur, entrées/sorties, mémoire, etc.) afin d'anticiper les ajustements de l'infrastructure informatique 1. De tels ajustements de l'infrastructure 1 informatique sont souvent nécessaires pour prévenir des dysfonctionnements et éviter une dégradation voire une interruption de service. Ainsi, le référentiel 11 de gestion de capacité a pour objectif de garantir que l'infrastructure informatique répond, à tout moment, aux exigences de qualité de service en alignement avec les besoins métiers.

En particulier, le référentiel 11 de gestion de la capacité permet de déterminer les cycles d'activité des différentes applications du SI et d'en déduire plusieurs périodes spécifiques. Ainsi, le référentiel 11 de gestion de la capacité est avantageusement configuré pour mémoriser au moins deux périodes de temps (ou d'activités) associées à des besoins en ressources différents.

Les données mémorisées via le référentiel 11 de gestion de la capacité ainsi que les périodes d'activités peuvent avoir été renseignées, dès la mise en route ou au cours du temps, par un utilisateur via une IHM. En effet, généralement l'administrateur du SI connait l'historique d'utilisation ainsi que les prévisions. Alternativement, les données mémorisées via le référentiel 11 de gestion de la capacité peuvent avoir été acquises par l'intermédiaire de sondes 60 (sondes informatiques ou sondes de consommation).

Il y a plus particulièrement, pour chaque période de temps (e.g. intervalle de temps associé à des besoins en ressources différents), la mémorisation d'une date de début et d'une date de fin de période et la mémorisation de besoin en ressource.

En outre, les valeurs mémorisées des besoins en ressources sont par exemple :
- une date de début de la période,
- une date de fin de la période, et/ou
- une liste des briques applicatives 2a, 2b, 2c, 2d avec leurs besoins en ressources (e.g. mémoire vive consommées, mémoire disque consommée, taux d'utilisation de CPU)

Les besoins en ressources des briques applicatives 2a, 2b, 2c, 2d peuvent être estimés à partir de besoins de périodes passées, à partir de données de prédiction d'utilisation des briques applicatives ou encore communiqués par l'intermédiaire d'une IHM. Le tableau 2 ci-dessous illustre un référentiel de gestion de la capacité selon un mode de réalisation pour une période donnée.

Le tableau 2 ci-dessous illustre un référentiel 11 de gestion de la capacité selon un mode de réalisation pour une période donnée.

**Tableau 2**

| | CPU | Débit réseau | Mémoire vive |
|---|---|---|---|
| **Brique applicative 1** | 20 % | 350 Kbps | 900 Mo |
| **Brique applicative 2** | 70 % | 1000 Kbps | 2651 Mo |
| **Brique applicative 3** | 30 % | NA | 300 Mo |

Comme cela a déjà été évoqué, la consommation en ressources des chaines applicatives peut varier dans le temps et en fonction des circonstances. Il a été remarqué que les performances du référentiel 11 de gestion de la capacité pouvaient être améliorées en y incluant un indicateur permettant de prendre en compte au moins une partie de cette variabilité.

Ainsi, de façon préférée, le référentiel 11 de gestion de la capacité comporte en outre une donnée correspondant à un coefficient de fiabilité, ladite donnée correspondant à un coefficient de fiabilité étant représentative de la fiabilité des prévisions en fonction du comportement dans les périodes précédentes et/ou des prévisions humaines pour les périodes futures. La donnée correspondant à un coefficient de fiabilité peut par exemple être proportionnelle à la variabilité de consommation en ressources mesurées sur des périodes antérieures ou bien être renseignée par un utilisateur.

Le coefficient de fiabilité peut avantageusement être prédéterminé et mémorisé par l'intermédiaire d'une IHM. En outre, de façon préférée, la donnée correspondant à un coefficient de fiabilité peut être mise à jour via une IHM ou bien automatiquement par l'intermédiaire de module de traitement des données de sondes.

Avantageusement, le coefficient de fiabilité correspond à une valeur, pour une période donnée, générée de façon automatique en fonction de valeurs de consommation en ressources passées et elle peut être de préférence modifiée par un utilisateur (e.g. l'administrateur du SI).

En outre, le référentiel 11 de gestion de la capacité peut être couplé à un module de surveillance apte à envoyer une alerte en cas de dépassement de seuil maximum d'utilisation de ressources. Une telle alerte peut être associée à une demande d'évolution du SI.

Au regard de la variabilité de l'utilisation des briques applicatives 2a, 2b, 2c, 2d en fonction du temps, il est possible de définir une pluralité de période de temps. Chaque période de temps pouvant présenter des besoins en ressources différents. La définition d'une pluralité de période de temps peut être réalisée à partir :
- de valeurs de volumes de données devant être traitées par les applications en fonction du temps, ces valeurs pouvant être mesurées par des sondes ou estimées par des utilisateurs puis mémorisées dans le système,
- de valeurs de consommation en ressource mesurées en fonction du temps, obtenues par exemple par des sondes ou
- d'informations provenant des activités métiers.

Ainsi, les périodes peuvent être définies sans faire appel à des calculs et seulement sur la base de l'expérience des utilisateurs. Dans ce cas, un module de segmentation est configuré pour réaliser une définition d'une pluralité de périodes de temps à partir de valeurs estimées sur la base des activités métiers soutenues par ladite infrastructure informatique.

Lorsque les périodes de temps sont définies par rapport aux ressources consommées, il est préférable de prendre en compte les ressources significatives, c'est-à-dire les ressources dont la consommation lors de l'exécution des briques applicatives est proche de leur seuil de criticité. Il est possible par exemple de porter une attention particulière aux lecture-écriture sur les disques. Avantageusement, la définition d'une pluralité de périodes de temps est réalisée à partir des volumes de données devant être traitées par les chaines applicatives.

La définition d'une pluralité de période de temps peut également être réalisée à partir de valeurs mesurées de consommation de ressources lors de l'exécution des briques applicatives. Ces valeurs peuvent être obtenues par une pluralité de sondes 60 configurées pour suivre le comportement de l'infrastructure informatique. La pluralité de sondes 60 peut permettre plus particulièrement d'identifier des périodicités dans la consommation des ressources.

Le module 10 de mémorisation comporte en outre un référentiel 12 de profils applicatifs. Le référentiel 12 de profils applicatifs est notamment configuré pour mémoriser, pour chaque brique applicative, des données d'identification de la ou des structures 3 informatiques utilisées par la brique applicative et une donnée correspondant à un indicateur de criticité de ladite brique applicative.

Les données d'identification de la ou des structures informatiques utilisées par la brique applicative correspondent généralement à une donnée unique, numérique ou alphanumérique, permettant d'identifier avec certitude le matériel (e.g. la ou les structures informatiques 3) utilisé par ladite brique applicative.

L'indicateur de criticité de la chaine applicative peut être une valeur numérique ou alphanumérique. Cet indicateur peut par exemple correspondre à un score, un classement, une note ou encore à une catégorie. Un tel indicateur permet de connaitre l'importance de la brique applicative considérée. Par exemple cela peut permettre de configurer le comportement du dispositif au plus proche des besoins des utilisateurs finaux. Ainsi, une application telle qu'une base de données faisant l'objet d'un accès fréquent par de nombreuses chaines applicatives différentes pourra présenter un indicateur de criticité élevé car une défaillance de cette chaine applicative engendrerait la défaillance de plusieurs autres chaines applicatives. De même, il pourra être attribué un indicateur de criticité élevé à une chaine applicative soumise à des SLA présentant de fortes pénalités.

Le tableau 3 ci-dessous illustre un référentiel 12 de profils applicatifs selon un mode de réalisation où la structure informatique 1 (S1) est un serveur physique et la structure informatique 2 (S2-Virt) est un serveur virtuel.

**Tableau 3**

| **Identifiant de la brique applicative** | **Structure Informatique** | **Indicateur de criticité** |
|---|---|---|
| Brique applicative 1 | S1 | 1 |
| Brique applicative 2 | S1 | 5 |
| Brique applicative 3 | S2-Virt | 3 |

Le module 10 de mémorisation comporte également un **référentiel 13 d'infrastructure informatique.** Le référentiel 13 d'infrastructure informatique est notamment configuré pour mémoriser des caractéristiques de ressources serveur pour au moins une structure 3 informatique de l'infrastructure informatique 1, lesdites caractéristiques de ressources serveur comportant, de préférence pour chacune des ressources, une donnée de règles d'évolution ainsi qu'une donnée correspondant à un indicateur de complexité d'évolution.

Le référentiel 13 d'infrastructure informatique peut mémoriser les caractéristiques de toutes les ressources de l'infrastructures. Néanmoins, un tel suivi peut être très lourd à mettre en place. Ainsi, de façon préférée, le référentiel 13 d'infrastructure informatique est configuré pour mémoriser les caractéristiques des ressources critiques de l'infrastructures.

La donnée de règles d'évolution peut avantageusement correspondre à un ensemble de règles d'évolution telles que par exemple le minimum de la ressource, le maximum de la ressource et le pas d'évolution de la ressource. En particulier, le minimum et le maximum de la ressource peuvent être renseignés en termes de nombre (e.g. nombre d'emplacements mémoire maximum) mais aussi en termes de quantité (e.g. puissance de CPU maximale au regard des composant disponibles).

En outre, la donnée correspondant à un indicateur de complexité d'évolution est représentative de la complexité pour faire évoluer (i.e. à la baisse et/ou à la hausse) les ressources de la structure informatique 3. En effet, l'ajout ou le retrait d'une mémoire vive et l'ajout d'un disque sont des actions relativement aisées et rapides alors que le retrait d'un disque est une opération plus délicate. En outre, les ajouts de puissance conféré à un serveur virtuel sont très aisés.

Les caractéristiques de ressources serveur peuvent également comporter des données sur le niveau actuel de ressources. Cela peut alors correspondre à un recensement des ressources présentent dans l'infrastructure informatique 1, et/ou une liste des serveurs disponibles dans l'infrastructure informatique (e.g. le ou les data-centers).

Les données mémorisées via le référentiel 13 d'infrastructure informatique peuvent avoir été renseignées, dès la mise en route ou au cours du temps, par un utilisateur via une IHM. De façon préférée, les données mémorisées via le référentiel 13 d'infrastructure informatique peuvent avoir été automatiquement enregistrées lors de la détection d'une nouvelle ressource. En effet, le changement du niveau d'une ressource peut influer sur les caractéristiques des ressources (e.g. le pas d'évolution). Ainsi, de préférence, le référentiel 13 d'infrastructure informatique est apte à mettre à jour les caractéristiques de ressources serveur après une modification d'au moins une ressource d'une structure 3 informatique.

Le tableau 4 ci-dessous illustre un référentiel 13 d'infrastructure informatique selon un mode de réalisation.

**Tableau 4**

| **Ressource** | **Niveau actuel** | **Min** | **Max** | **Pas d'évolution** | **Complexité (hausse/baisse)** |
|---|---|---|---|---|---|
| S1 - Mémoire | 16 Go | 8 Go | 32 Go | 2 Go | 2 |
| S1 - Disque | 8 To | 4 To | 16 To | 4 To | 2/4 |
| S2 - Virt - Mémoire | 2 Go | 2 Go | 10 Go | 1 Go | 1 |

Le module 10 de mémorisation comporte un **référentiel 14 de ressources disponibles.** Le référentiel 14 de ressources disponibles est notamment configuré pour mémoriser des caractéristiques de ressources disponibles, lesdites caractéristiques de ressources disponibles comportant des données de quantité disponible ainsi qu'une donnée correspondant à un indicateur de complexité de mise à disposition de la ressource.

Ainsi, ce référentiel 14 est celui qui correspond aux ressources disponibles pour faire évoluer les serveurs de l'infrastructure informatique 1. Il peut notamment contenir pour chaque ressource : son type, sa quantité, la liste des serveurs compatibles... Ainsi, les caractéristiques de ressources disponibles peuvent de préférence comporter :
- une donnée d'identification de la ressource disponible,
- une donnée sur le type de ressource disponible,
- une liste de structures informatiques 3 (e.g. serveurs) compatibles avec la ressource disponible, et/ou
- une donnée sur la quantité de ressource disponible.

Avantageusement, le référentiel 14 de ressources disponibles comporte en outre une donnée correspondant à un indicateur de compatibilité. L'indicateur de compatibilité permet de déterminer sur quelle structure informatique la ressource disponible pourra être installée.

La donnée correspondant à un indicateur de complexité de mise à disposition de la ressource est une donnée représentative de la complexité à mettre la ressource à la disposition de la structure informatique 3 dans le cadre d'une possible évolution. Par exemple, en fonction des ressources celles-ci peuvent être en stock (i.e. complexité faible) ou déjà utilisées sur un autre serveur (i.e. complexité élevée).

Les données mémorisées via le référentiel 14 de ressources disponibles sont généralement renseignées, par un utilisateur, via une IHM. Les données mémorisées via le référentiel 14 de ressources disponibles peuvent également être reçues via le module de communication et provenir d'un logiciel de gestion des stocks de ressources disponibles.

Le tableau 5 ci-dessous illustre un référentiel 14 de ressources disponibles selon un mode de réalisation.

**Tableau 5**

| Type de ressource | Compatibilité | Quantité | Indicateur de complexité |
|---|---|---|---|
| Disque - 4 To | S1, S3 | 10 | 1 |
| Mémoire - 2 Go | S1, S3 | 10 | 3 |
| Mémoire - 1 Go | S2-Virt | 8 Go | 1 |

Le module 10 de mémorisation comporte un **référentiel 15 de règles d'exécution.** Le référentiel 15 de règles d'exécution est notamment configuré pour mémoriser des données correspondant à des niveaux maximums d'utilisation de ressources.

Le référentiel 15 de règles d'exécution peut mémoriser des règles d'exécution spécifiques pour chacune des ressources de l'infrastructure informatique 1. Néanmoins, un tel référentiel peut être très lourd à mettre en place. Ainsi, de façon préférée, le référentiel 15 de règles d'exécution est configuré pour mémoriser des règles d'exécution par catégorie de ressources. De façon particulière, les règles d'exécution peuvent être précisées en fonction des briques applicatives. Alternativement, elles peuvent être définie par type de ressources et par structure informatique (e.g. serveurs). En effet, les briques applicatives peuvent avoir des comportements différents et certainement briques applicatives pourraient être autorisées à consommer des ressources au-delà d'un seuil prédéterminé (e.g. une base de données peut être autorisée à consommer une quantité de mémoire allant jusqu'à 90 %)

Les niveaux maximums d'utilisation mémorisés par le référentiel de règles d'exécution correspondent à des niveaux au-delà desquels il existe un risque accru de non-respect de SLA prédéterminés. En particulier, cela permet de définir les limites maximums acceptables de consommations de ressources pour chaque structure informatique 3 (e.g. serveur).

Les données mémorisées via le référentiel 15 de règles d'exécution peuvent avoir été renseignées, dès la mise en route ou au cours du temps, par un utilisateur via une IHM.

En outre, elles peuvent être modifiées de façon à être conforme aux SLA prédéterminés. Comme cela sera détaillé par la suite de telles règles d'exécution peuvent être utilisées pour invalider un plan de placement (i.e. plan de déploiement) qui en contreviendrait à une ou plusieurs de ces règles.

Le tableau 6 ci-dessous illustre un référentiel 15 de règles d'exécution selon un mode de réalisation.

**Tableau 6**

| Type de ressource | Structure informatique | Brique applicative | Seuil maximum |
|---|---|---|---|
| Mémoire | S1 | na | 80 % |

Les informations et données ont été présentées, de façon organisée, sous la forme de référentiels 11, 12, 13, 14, 15 indépendants. Néanmoins, les référentiels peuvent être imbriqués les uns avec les autres au sein d'un ou de plusieurs référentiels. L'importance étant principalement sur les données mémorisées via ce ou ces référentiels.

Le dispositif 100 selon l'invention comporte notamment un **module 20 de planification de charge** apte à calculer des niveaux de ressources nécessaires pour une période de temps. En particulier, le module 20 de planification de charge est apte à calculer cela à partir des données du référentiel 11 de gestion de la capacité et du référentiel 12 de profils applicatifs. La période de temps correspond à une période d'activité (i.e. de production) sur l'infrastructure informatique 1 et les niveaux de ressources nécessaire correspondent aux niveaux de ressources nécessaires pour faire fonctionner les briques applicatives au regard notamment de l'utilisation de celles-ci en production.

En particulier, le module 20 de planification de charge est avantageusement configuré pour calculer, pour une période de temps donnée, les niveaux de ressources nécessaires pour la mise en œuvre des briques applicatives.

Ainsi, le module 20 de planification de charge permet, par exemple pour une période de temps à venir, d'avoir une information sur les besoins globaux en ressources des différentes machines virtuelles ou serveurs physique qui supporte les applications du système d'information SI.

Avantageusement, les valeurs calculées des niveaux de ressources nécessaires pour la mise en œuvre des briques applicatives peuvent prendre en compte les valeurs des coefficients de fiabilité et de criticité prédéterminés.

Le dispositif 100 selon l'invention comporte notamment un **module 30 de sélection des structures informatiques** configuré pour sélectionner des structures 3 informatiques nécessaires à une période de temps.

Ainsi, il est possible de générer une liste des structures informatiques 3 (e.g. serveurs) qui devront être utilisées afin de mettre à disposition l'ensemble des ressources nécessaires aux briques 2 applicatives pour la prochaine période. Avantageusement, le module 30 de sélection des structures informatiques 3 est configuré pour sélectionner en priorité les structures 3 informatiques utilisées sur la période en cours. Le module 30 de sélection des structures informatiques peut en outre être configuré pour proposer une adaptation, si besoin, du niveau de ressources de ces structures informatiques 3 en tenant compte notamment pour chaque ressource de leurs règles d'évolution, de la complexité de la mise en œuvre de l'évolution, mais également du référentiel 14 de ressources disponibles.

En particulier, le module 30 de sélection des structures informatiques est configuré pour réaliser cette sélection à partir des niveaux de ressources nécessaires calculés et des données du référentiel 13 d'infrastructure informatique et du référentiel 14 de ressources disponibles.

En particulier, le module 30 de sélection des structures informatiques peut être configuré pour générer une liste de ressources nécessaires, à partir :
- des données relatives aux ressources utilisées par les briques applicatives 2, sur la période en cours, et/ou
- des données relatives aux règles d'évolution, à la complexité de la mise en œuvre de l'évolution, mais également du référentiel 14 de ressources disponibles.

Avantageusement, les paramètres complémentaires pris en compte par le module 30 de sélection sont sélectionnés parmi :
- des règles d'évolution de chaque ressource, et/ou
- des données correspondant à un indicateur de complexité de mise en œuvre de l'évolution.

Le dispositif 100 selon l'invention comporte également un **module 40 d'optimisation** configuré pour générer au moins un plan de placement comportant des données de structures informatique 3 à utiliser pour chaque brique applicative 2a, 2b, 2c, 2d et au moins un plan d'évolution listant des modifications de ressources à effectuer. En particulier, le module 40 d'optimisation est configuré pour générer cela à partir notamment de la sélection des structures 3 informatiques nécessaires à la période de temps et des données du référentiel de règles d'exécution.

Avantageusement, le plan de placement comporte des données sur les briques applicatives 2a, 2b, 2c, 2d et sur les structures 3 informatique hébergeant lesdites briques applicatives. En particulier, le plan de placement permet de déterminer sur quelles structures 3 informatique seront hébergées les briques 2 applicatives et de ressources à modifier.

De préférence, le module 40 d'optimisation est configuré pour générer au moins un plan de placement tel que, les structures informatiques présentent des consommations de ressources homogénéisées entre différentes structures informatiques 3. Ainsi, la consommation prévue de ressources est homogénéisée entre les différentes structures informatiques impliquées et la résilience de l'infrastructure informatique 1 en est améliorée. De préférence, cette homogénéisation peut prendre en compte des niveaux maximums d'utilisation de ressources définis dans le référentiel de règles d'exécution.

En outre, les inventeurs proposent de calculer une pluralité de plans possibles et de retenir celui qui permet d'obtenir des niveaux de consommation de ressources similaires (e.g. niveau d'utilisation de ressource présente une différence inférieure à 20%) sur chaque structure informatique (e.g. serveur d'infrastructure) tout en ne dépassant pas les niveaux maximums d'utilisation de ressources.

Ainsi, le module de génération de plan de placement est avantageusement configuré pour générer une pluralité de plans de placement et/ou de plan d'évolution. Ainsi, avantageusement, le dispositif selon l'invention comporte un catalogue de plans configuré pour stocker une pluralité de plan de placement et/ou d'évolution et un module de sélection de plans, apte à sélectionner un plan de placement et/ou d'évolution adapté. De façon préférée, le dispositif selon l'invention comporte un catalogue de plans configuré pour stocker une pluralité de plan d'évolution et un module de sélection de plans, apte à sélectionner un plan d'évolution adapté. De façon plus préférée, le dispositif selon l'invention comporte un catalogue de plans configuré pour stocker une pluralité de plan de placement et d'évolution et un module de sélection de plans, apte à sélectionner un plan de placement et d'évolution adapté.

De préférence, le catalogue de plans contient entre 5 et 50 plans, de façon plus préférée entre 10 et 40 et de façon encore plus préférée 10 et 20. Ces périodes de temps peuvent alors être définies par l'utilisateur ou calculées à partir de données. De façon préférée, une période de temps correspond à une durée pendant laquelle l'activité est relativement stable. Les périodes de temps peuvent être caractérisées par des différences dans les caractéristiques de fonctionnement des briques applicatives telles que : le volume de données à traiter, les ressources consommées par les briques applicatives. Les périodes de temps peuvent également être définies lors de la mise en œuvre du procédé par un utilisateur au regard d'informations métiers.

Le module d'optimisation est plus particulièrement configuré pour déterminer, pour chacune des périodes de temps, le plan de placement et/ou d'évolution optimum visant, en fonction de la période de temps, à assurer le respect des règles d'exécution tout en homogénéisant l'utilisation des ressources.

Le dispositif 100 selon l'invention peut également comporter **un module 50 de communication** apte à échanger des données avec des dispositifs tiers. Le module 50 de communication est notamment configuré pour transmettre un rapport comportant pour une période une liste des structures informatiques 3 sur lesquelles pourront être déployées les briques applicatives 2a, 2b, 2c, 2d et une liste de modifications de ressources à réaliser sur les structures informatique 3.

Le dispositif 100 selon l'invention peut également comporter ou être couplé à une ou plusieurs sondes 60 notamment pour mesurer la consommation en ressources par les chaines applicatives 2. La ou les sondes permettent de collecter des données sur la consommation des ressources de l'infrastructure informatique 1 et plus particulièrement de chaque structure 3 informatique, ou machine, la composant. Plusieurs ressources peuvent être mesurées en parallèle.

Ces mesures peuvent être réalisées à partir d'une sonde, par exemple une sonde de type « Nigel's Monitor » (Nmon) ou « Performance Monitor » (Perfmon). Les sondes Nmon permettent par exemple d'afficher les données de CPU, mémoire, swap, réseau, des informations sur les utilisateurs, les groupes, les supports de stockages, sur l'utilisation du kernel, ou les processus les plus consommateurs. Les sondes de type Perfmon permettent de mesurer les performances d'une infrastructure informatique 1. Les informations collectées peuvent par exemple correspondre à des pourcentages d'utilisation de ressources, des temps de réponse, des temps de traitement mais également le statut des ports, le nombre de files de message JDBC ou JMS, le taux d'occupation du système de fichiers, le taux de fonctionnement du ramasse miettes ou récupérateur de mémoires (pour « garbage collector » en anglais) pour les applications J2EE (pour « Java Enterprise Edition » en anglais).

Ces sondes peuvent être associées à chaque paramètre (e.g. ressource) pour remonter les informations de mesure ou métriques, représentant par exemple l'état de fonctionnement des ressources et la consommation associée. Pour chaque paramètre, la ou les sondes définissent un identifiant de paramètre et une valeur de paramètre. Les valeurs des paramètres peuvent être suivies en continu ou à des intervalles configurables de façon à obtenir des informations pour chaque paramètre en fonction du temps. Ces informations peuvent être stockées dans une mémoire comme par exemple dans le module 10 de mémorisation. Dans certains modes de réalisation, le dispositif comporte une IHM permettant de définir les sondes sur chaque machine qui remontent les métriques provenant de l'utilisation des ressources de la machine.

De telles consommations en ressources peuvent être mémorisées dans au moins un tableau matriciel mémorisé, dont le nombre de ressource définit une dimension du tableau matriciel, le nombre de plages horaires affectées définissant une autre dimension du tableau matriciel, et les pourcentages d'utilisation de la ressource constituant le coefficient d'une ligne ou colonne supplémentaire. Ces informations peuvent, de préférence, se retranscrire sous la forme d'une matrice Mj machine mémorisée dans une mémoire, chaque ligne de la matrice machine Mj représentant une ressource de la machine (CPU, RAM, ....etc.), chaque colonne de la matrice une plage horaire et chaque valeur présente dans une case de la ligne d'une ressource représentant la consommation de cette ressource pour la période horaire définie pour la colonne.

Le dispositif 100 selon l'invention peut comporter en outre un module d'interface homme-machine (IHM) par exemple en lien avec le module 50 de communication.

Les différents modules ou unités sont distincts sur la figure 2 mais l'invention peut prévoir divers types d'agencement comme par exemple un seul module cumulant l'ensemble des fonctions décrites ici. De même, ces moyens peuvent être divisés en plusieurs cartes électroniques ou bien rassemblés sur une seule carte électronique.

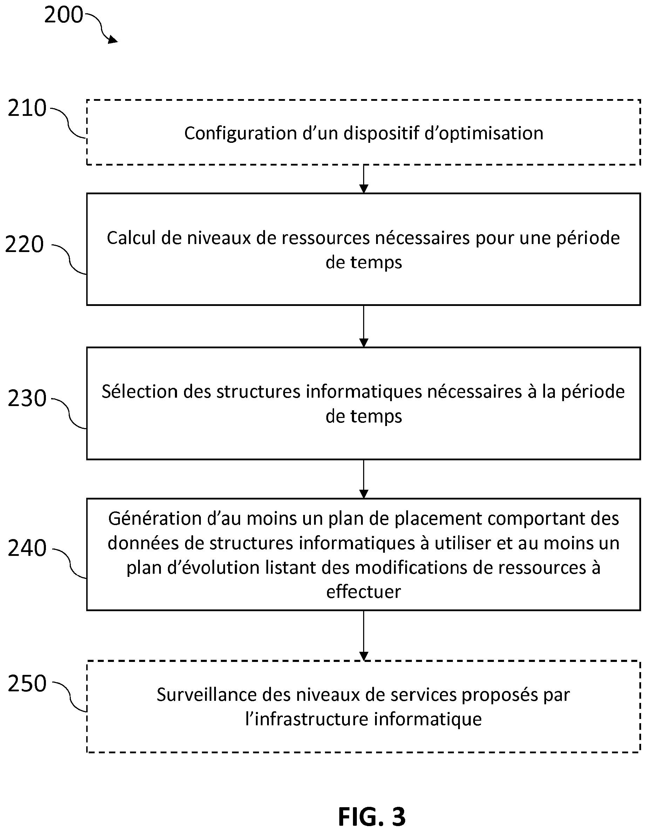

**Selon un autre aspect,** l'invention porte sur un **procédé 200 pour l'optimisation de l'utilisation des ressources d'une infrastructure informatique mis en œuvre par un dispositif d'optimisation.** Le procédé selon l'invention peut avantageusement être mis en œuvre par un dispositif 100 selon l'invention. La **figure 3** illustre schématiquement un procédé pour l'optimisation de l'utilisation des ressources selon l'invention.

Comme cela est présenté dans la figure 3, le procédé 200 d'optimisation selon l'invention comprend une première étape 210 de configuration d'un dispositif d'optimisation. L'étape 210 de configuration peut notamment comporter des étapes de mémorisation de données, par exemple dans un module 10 de mémorisation, correspondant à des périodes de temps, des coefficients de fiabilité, des indicateurs de criticité de brique applicative, des règles d'évolution, des indicateurs de complexité d'évolution, des niveaux actuels de ressources, des indicateurs de complexité de mise à disposition d'une ressource, des indicateurs de compatibilité et des règles d'exécution.

Le procédé 200 d'optimisation selon l'invention comprend une **étape 220 de calcul de niveaux de ressources nécessaires pour une période de temps,** à partir des données d'un référentiel 11 de gestion de la capacité et d'un référentiel 12 de profils applicatifs. Ce calcul peut notamment être réalisé par un module présentant les caractéristiques du module 20 de planification de charge selon l'invention.

Le procédé selon l'invention comporte également une **étape 230 de sélection des structures informatiques 3 nécessaires à la période de temps,** à partir des niveaux de ressources nécessaires calculés et des données du référentiel 13 de structure informatique et du référentiel 14 de ressources disponibles. Cette sélection peut notamment être réalisée par un module présentant les caractéristiques du module 30 de sélection des structures informatiques.

Le procédé selon l'invention comporte également une **étape 240 de génération d'au moins un plan de placement comportant des données de structures informatiques 3 à utiliser et au moins un plan d'évolution listant des modifications de ressources à effectuer.** Ces plans sont de préférence générés à partir de la sélection de structures informatiques 3 réalisée lors de l'étape 230 et des données du référentiel 15 de règles d'exécution. Cette génération peut notamment être réalisée par un module présentant les caractéristiques du module 40 d'optimisation.

Le procédé selon l'invention comporte également une **étape 250 de surveillance des niveaux de services proposés par l'infrastructure informatique 1.** Cette surveillance peut notamment être réalisée par des sondes présentant les caractéristiques des sondes 60 décrites précédemment. Cette analyse comporte avantageusement une mesure des valeurs de paramètres de qualité de service en réponse à la mise en production des briques applicatives sur la nouvelle configuration de l'infrastructure informatique et une comparaison des valeurs mesurées de paramètres qualité de service à des valeurs seuil de paramètre de qualité de service.

Un mode de réalisation du procédé selon l'invention est illustré à la figure 3. Le procédé comporte initialement une étape 211 de configuration. Cette étape de configuration vise notamment à mémoriser les données relatives : aux périodes de temps (i.e. d'activités), aux indicateurs de fiabilité, aux indicateurs de criticité, aux indicateurs de complexité de mise à disposition ou d'évolution, aux règles d'évolution et/ou aux règles d'exécution.

Lorsqu'une nouvelle période de temps est considérée 212, le procédé selon l'invention comporte une étape 213 de vérification de la présence, au sein d'un catalogue de plans, d'un plan de placement et d'un plan d'évolution correspondant à ladite période. Si un plan de placement et un plan d'évolution sont disponibles pour la période alors il y a exécution des plans d'évolution et de placement sinon, le procédé selon l'invention comporte une étape 221 de détermination des ressources nécessaires à l'exécution de l'ensemble des briques applicatives sur l'infrastructure informatique (e.g. pour l'ensemble des machines virtuelle). En particulier, à partir du référentiel 11 de gestion de capacité, il y a détermination des besoins globaux en ressources des différentes machines virtuelles ou Partitions qui supportent les applications du SI. Les coefficients de fiabilité et de criticité peuvent de préférence être utilisés lors de ces calculs afin de majorer le dimensionnement.

Le procédé comporte ensuite une étape 231 de détermination des serveurs opérationnels à utiliser ainsi que des ressources nécessaires. Lors d'une étape 232 les serveurs sont sélectionnés en fonction des ressources nécessaires les plus facilement accessibles (e.g. utilisées lors de la périodes précédente) et de la complexité à les modifier.

Les serveurs et les ressources sélectionnés sont ensuite comparés aux niveaux de ressources nécessaires et aux règles d'exécution lors d'une étape 241. Cette étape peut avantageusement permettre la génération d'une pluralité de plans de placement. Suite à ces comparaisons, un plan de placement et un plan d'évolution sont sélectionnés lors d'une étape 242 de façon à respecter les règles d'exécution d'une part et à homogénéiser les consommations de ressources sur les différents serveurs d'autre part. Les plans sont alors exécutés lors d'une étape 245.

Avantageusement, une fois la mise en production réalisée, le procédé comporte une étape 251 de surveillance de l'infrastructure informatique de façon à déterminer si les niveaux de services sont respectés, les règles d'exécution ont été respectées et/ou les consommations de ressources ont été au niveau de consommation attendu. Si tel est le cas (OK) alors les plans sont enregistrés dans un catalogue de plans lors d'une étape 214 et sinon, le plan est invalidé lors d'une étape 252.

Ainsi, le dispositif 100, indépendant ou installé au sein d'une infrastructure informatique 1, et le procédé selon l'invention permettent d'optimiser l'utilisation de ressources d'une infrastructure informatique 1. Ils permettent notamment, de façon rapide et automatique, de générer un plan d'évolution listant les modifications de ressources à effectuer pour mettre l'infrastructure informatique 1 dans des conditions optimales pour une période d'activité donnée. Ils sont capables de rapidement déterminer quelles ressources pourraient être diminuées ou augmentée sur l'infrastructure informatique et le déploiement des briques applicatives de façon à conserver une qualité de service à un niveau souhaité.

## Revendications

1. Dispositif pour l'optimisation de l'utilisation des ressources sur une infrastructure informatique (1), l'infrastructure informatique (1) comportant une ou plusieurs structures informatiques (3) hébergeant une pluralité de briques applicatives (2a, 2b, 2c, 2d), ledit dispositif comportant :
- Un module (10) de mémorisation apte à mémoriser une pluralité de référentiels incluant :
∘ Un référentiel (11) de gestion de la capacité configuré pour mémoriser au moins deux périodes de temps associées à des besoins en ressources différents,
∘ Un référentiel (12) de profils applicatifs configuré pour mémoriser des données d'identification de la ou des structures informatiques (3) utilisées par une brique applicative et une donnée correspondant à un indicateur de criticité de ladite brique applicative,
∘ Un référentiel (13) d'infrastructure informatique configuré pour mémoriser des caractéristiques de ressources serveurs pour au moins une structure informatique (3) de l'infrastructure informatique (1), lesdites caractéristiques de ressources serveurs comportant une donnée de règles d'évolution ainsi qu'une donnée correspondant à un indicateur de complexité d'évolution,
∘ Un référentiel (14) de ressources disponibles configuré pour mémoriser des caractéristiques de ressources disponibles, lesdites caractéristiques de ressources disponibles comportant des données de quantité disponible ainsi qu'une donnée correspondant à un indicateur de complexité de mise à disposition de la ressource, et
∘ Un référentiel (15) de règles d'exécution configuré pour mémoriser des données correspondant à des niveaux maximums d'utilisation de ressources ;
- Un module (20) de planification de charge apte à calculer pour une période de temps, à partir des données du référentiel (11) de gestion de la capacité et du référentiel (12) de profils applicatifs, des niveaux de ressources nécessaires ;
- Un module (30) de sélection des structures informatiques configuré pour, à partir des niveaux de ressources nécessaires calculés et des données du référentiel (13) d'infrastructure informatique et du référentiel (14) de ressources disponibles, sélectionner des structures informatiques (3) nécessaires à la période de temps ; et
- Un module (40) d'optimisation configuré pour générer, à partir de la sélection des structures informatiques (3) nécessaires à la période de temps et des données du référentiel (15) de règles d'exécution, au moins un plan de placement comportant des données de structures informatiques (3) à utiliser et au moins un plan d'évolution listant des modifications de ressources à effectuer.

2. Dispositif selon la revendication 1, **caractérisé en ce qu'**il comporte en outre un catalogue de plans configuré pour stocker une pluralité de plans de placement et/ou d'évolution.

3. Dispositif selon l'une des revendications 1 ou 2, **caractérisé en ce que** les périodes de temps mémorisées par le référentiel (11) peuvent être **caractérisées par** des différences dans les caractéristiques de fonctionnement des briques applicatives (2a, 2b, 2c, 2d) telles que : un volume de données à traiter, des ressources consommées par les briques applicatives.

4. Dispositif selon l'une quelconque des revendications 1 à 3, **caractérisé en ce que** le référentiel (11) de gestion de la capacité comporte en outre une donnée correspondant à un coefficient de fiabilité des besoins en ressources.

5. Dispositif selon la revendication 4, **caractérisé en ce que** ladite donnée correspondant à un coefficient de fiabilité des besoins en ressources est représentative de la fiabilité des prévisions en fonction du comportement dans les périodes précédentes et/ou des prévisions humaines pour les périodes futures.

6. Dispositif selon l'une quelconque des revendications 1 à 5, **caractérisé en ce que** la donnée de règles d'évolution est sélectionnée parmi le minimum de la ressource, le maximum de la ressource et/ou le pas d'évolution de la ressource.

7. Dispositif selon l'une quelconque des revendications 1 à 6, **caractérisé en ce que** le référentiel (13) d'infrastructure informatique est apte à mettre à jour les caractéristiques de ressources serveur après une modification d'au moins une ressource de la ou des structures (3) informatiques.

8. Dispositif selon l'une quelconque des revendications 1 à 7, **caractérisé en ce que** le référentiel (14) de ressources disponibles comporte en outre une donnée correspondant à un indicateur de compatibilité.

9. Dispositif selon l'une quelconque des revendications 1 à 8, **caractérisé en ce que** le module (30) de sélection des structures informatique est configuré pour générer en outre une liste de ressources nécessaires à la période de temps à partir notamment des données correspondant à des niveaux d'utilisation des ressources sur les structures informatiques (3), sur la période en cours.

10. Dispositif selon l'une quelconque des revendications 1 à 9, **caractérisé en ce que** le module (30) de sélection des structures informatique est configuré pour sélectionner en priorité les structures (3) informatiques utilisées sur la période en cours.

11. Dispositif selon l'une quelconque des revendications 1 à 10, **caractérisé en ce que** le module (40) d'optimisation est configuré pour générer au moins un plan de placement présentant des consommations de ressources homogénéisées entre différents serveurs d'infrastructure.

12. Dispositif selon l'une quelconque des revendications 1 à 11, **caractérisé en ce que** le module (40) d'optimisation est configuré pour générer une pluralité de plans de placement et de plans d'évolution et pour sélectionner un plan de placement et un plan d'évolution.

13. Dispositif selon l'une quelconque des revendications 1 à 12, **caractérisé en ce que** le module (40) d'optimisation est configuré pour générer au moins un plan de placement tel que les structures (3) informatiques présentent des consommations de ressources homogénéisées entre différentes structures informatiques (3).

14. Procédé (200) pour l'optimisation de l'utilisation des ressources d'une infrastructure informatique (1), ledit procédé étant mis en œuvre par un dispositif d'optimisation selon l'une quelconque des revendications 1 à 13, et ledit procédé comportant les étapes suivantes :
- Calcul (220), par le module (20) de planification de charge, de niveaux de ressources nécessaires pour une période de temps, à partir des données du référentiel (11) de gestion de la capacité et du référentiel (12) de profils applicatifs ;
- Sélection (230), par un module (20) de sélection des structures informatiques, des structures informatiques (3) nécessaires à la période de temps, à partir des niveaux de ressources nécessaires calculés et des données du référentiel (13) d'infrastructure informatique et du référentiel (14) de ressources disponibles ;
- Génération (240), par un module (40) d'optimisation, d'au moins un plan de placement comportant des données de structures informatiques (3) à utiliser et au moins un plan d'évolution listant des modifications de ressources à effectuer, à partir de la sélection de structures informatiques et des données du référentiel (15) de règles d'exécution.

15. Procédé (200) selon la revendication 14, **caractérisé en ce qu'**il comporte en outre une étape (250) de surveillance de l'infrastructure informatique (1) de façon à déterminer si les règles d'exécution sont respectées.

## Patentansprüche

1. Vorrichtung zur Optimierung der Verwendung der Ressourcen in einer Informatikinfrastruktur (1), wobei die Informatikinfrastruktur (1) eine oder mehrere Informatikstruktur(en) (3) umfasst, die eine Vielzahl von Anwendungsbausteinen (2a, 2b, 2c, 2d) beherbergt, wobei die genannte Vorrichtung umfasst:
- ein Speichermodul (10), das zum Speichern einer Vielzahl von Bezugsgrößen geeignet ist, die einschließen:
∘eine Verwaltungs-Bezugsgröße (11) der Kapazität, die zum Speichern von wenigstens zwei Zeitperioden ausgestaltet ist, die unterschiedlichem Ressourcenbedarf zugeordnet sind,
∘ eine Anwendungsprofil-Bezugsgröße (12), die zum Speichern der Kenndaten der Informatikstruktur oder -strukturen (3), die von einem Anwendungsbaustein verwendet werden, und einem Datenelement, das einem Kritikalitätsindikator des genannten Anwendungsbausteins entspricht, ausgestaltet ist,
∘ eine Informatikinfrastruktur-Bezugsgröße (13), die zum Speichern der Serverressourcen-Merkmale für wenigstens eine Informatikstruktur (3) der Informatikinfrastruktur (1) ausgestaltet ist, wobei die genannten Serverressourcen-Merkmale ein Evolutionsregel-Datenelement sowie ein Datenelement umfassen, das einem Evolutionskomplexitäts-Indikator entspricht,
∘ eine Bezugsgröße (14) verfügbarer Ressourcen, die zum Speichern der verfügbaren Ressourcenmerkmale ausgestaltet ist, wobei die genannten verfügbaren Ressourcenmerkmale Daten der verfügbaren Menge sowie ein Datenelement umfassen, das einem Komplexitätsindikator der Bereitstellung der Ressource entspricht, und
∘ eine Ausführungsregel-Bezugsgröße (15), die zum Speichern der Daten ausgestaltet ist, die maximalen Ressourcennutzungs-Niveaus entsprechen;
- ein Lastplanungs-Modul (20), das zum Berechnen für eine Zeitperiode ausgehend von Daten der Verwaltungs-Bezugsgröße (11) der Kapazität und der Anwendungsprofil-Bezugsgröße (12) der notwendigen Ressourcenniveaus geeignet ist;
- ein Auswahl-Modul (30) der Informatikstrukturen, das zum Auswählen der für die Zeitperiode notwendigen Informatikstrukturen (3) ausgehend von den berechneten notwendigen Ressourcenniveaus und den Daten der Informatikinfrastruktur-Bezugsgröße (13) und der Bezugsgröße (14) verfügbarer Ressourcen ausgestaltet ist; und
- ein Optimierungsmodul (40), das zum Erzeugen wenigstens einer Anordnungsebene ausgehend von der Auswahl der für die Zeitperiode notwendigen Informatikstrukturen (3) und der Daten der Ausführungsregeln-Bezugsgröße (15) ausgestaltet ist, umfassend zu verwendende Informatikstruktur-Daten (3) und wenigstens eine Evolutionsebene, die auszuführende Ressourcenmodifikationen auflistet.

2. Vorrichtung gemäß Anspruch 1, **dadurch gekennzeichnet, dass** sie darüber hinaus einen Ebenenkatalog umfasst, der zum Speichern einer Vielzahl von Anordnungs- und / oder Evolutionsebenen ausgestaltet ist.

3. Vorrichtung gemäß einem der Ansprüche 1 oder 2, **dadurch gekennzeichnet, dass** die von der Bezugsgröße (11) gespeicherten Zeitperioden durch Differenzen bei den Betriebsmerkmalen der Anwendungsbausteine (2a, 2b, 2c, 2d) wie z. B.: einem Volumen zu verarbeitender Daten, von den Anwendungsbausteinen verbrauchten Ressourcen, gekennzeichnet sein können.

4. Vorrichtung gemäß irgendeinem der Ansprüche 1 bis 3, **dadurch gekennzeichnet, dass** die Verwaltungs-Bezugsgröße (11) der Kapazität darüber hinaus ein Datenelement umfasst, das einem Zuverlässigkeitskoeffizienten des jeweiligen Bedarfs an Ressourcen entspricht.

5. Vorrichtung gemäß Anspruch 4, **dadurch gekennzeichnet, dass** das genannte Datenelement, das einem Zuverlässigkeitskoeffizienten des Bedarfs an Ressourcen entspricht, repräsentativ für die Zuverlässigkeit der Prognosen in Abhängigkeit von dem Verhalten in den vorherigen Perioden und / oder den menschlichen Prognosen für die zukünftigen Perioden ist.

6. Vorrichtung gemäß irgendeinem der Ansprüche 1 bis 5, **dadurch gekennzeichnet, dass** das Evolutionsregel-Datenelement aus dem Minimum der Ressource, dem Maximum der Ressource und / oder dem Evolutionsschritt der Ressource ausgewählt ist.

7. Vorrichtung gemäß irgendeinem der Ansprüche 1 bis 6, **dadurch gekennzeichnet, dass** die Informatikinfrastruktur-Bezugsgröße (13) geeignet ist, die Serverressourcen-Merkmale nach einer Änderung wenigstens einer Ressource der Informatikstruktur oder -strukturen (3) zu aktualisieren.

8. Vorrichtung gemäß irgendeinem der Ansprüche 1 bis 7, **dadurch gekennzeichnet, dass** die Bezugsgröße (14) verfügbarer Ressourcen darüber hinaus ein Datenelement umfasst, das einem Kompatibilitätsindikator entspricht.

9. Vorrichtung gemäß irgendeinem der Ansprüche 1 bis 8, **dadurch gekennzeichnet, dass** das Auswahlmodul (30) der Informatikstrukturen ausgestaltet ist, um darüber hinaus eine Liste von notwendigen Ressourcen für die Zeitperiode ausgehend insbesondere von Daten zu erzeugen, die Verwendungsniveaus der Ressourcen in den Informatikstrukturen (3) in der laufenden Periode entsprechen.

10. Vorrichtung gemäß irgendeinem der Ansprüche 1 bis 9, **dadurch gekennzeichnet, dass** das Auswahlmodul (30) der Informatikstrukturen zum vorrangigen Auswählen der in der laufenden Periode verwendeten Informatikstrukturen (3) ausgestaltet ist.

11. Vorrichtung gemäß irgendeinem der Ansprüche 1 bis 10, **dadurch gekennzeichnet, dass** das Optimierungsmodul (40) zum Erzeugen wenigstens einer Anordnungsebene ausgestaltet ist, die Verbräuche von homogenisierten Ressourcen zwischen unterschiedlichen Infrastrukturservern aufweist.

12. Vorrichtung gemäß irgendeinem der Ansprüche 1 bis 11, **dadurch gekennzeichnet, dass** das Optimierungsmodul (40) ausgestaltet ist, um eine Vielzahl von Anordnungsebenen und Evolutionsebenen zu erzeugen und um eine Anordnungsebene und eine Evolutionsebene auszuwählen.

13. Vorrichtung gemäß irgendeinem der Ansprüche 1 bis 12, **dadurch gekennzeichnet, dass** das Optimierungsmodul (40) zum Erzeugen wenigstens einer Anordnungsebene derart ausgestaltet ist, dass die Informatikstrukturen (3) Verbräuche von zwischen unterschiedlichen Informatikstrukturen (3) homogenisierten Ressourcen aufweisen.

14. Verfahren (200) zum Optimieren der Verwendung der Ressourcen einer Informatikinfrastruktur (1), wobei das genannte Verfahren durch eine Optimierungsvorrichtung gemäß irgendeinem der Ansprüche 1 bis 13 umgesetzt wird, und wobei das genannte Verfahren die folgenden Schritte umfasst:
- Berechnung (200) von notwendigen Ressourcenniveaus für eine Zeitperiode durch das Lastplanungs-Modul (20) ausgehend von den Daten der Verwaltungs-Bezugsgröße (11) der Kapazität und der Anwendungsprofil-Bezugsgröße (12);
- Auswahl (230) der notwendigen Informatikstrukturen (3) für die Zeitperiode durch ein Auswahlmodul (20) der Informatikstrukturen ausgehend von den berechneten notwendigen Ressourcenniveaus und den Daten der Informatikinfrastruktur-Bezugsgröße (13) und der Bezugsgröße (14) von verfügbaren Ressourcen;
- Erzeugen (240) wenigstens einer Anordnungsebene durch ein Optimierungsmodul (40), umfassend zu verwendende Informatikstruktur-Daten (3) und wenigstens eine Evolutionsebene, die durchzuführende Ressourcenmodifikationen auflistet, ausgehend von der Auswahl von Informatikstrukturen und den Daten der Ausführungsregel-Bezugsgröße (15).

15. Verfahren (200) gemäß Anspruch 14, **dadurch gekennzeichnet, dass** es darüber hinaus einen Überwachungsschritt (250) der Informatikinfrastruktur (1) derart umfasst, dass bestimmt wird, ob die Ausführungsregeln beachtet werden.

## Claims

1. A device for optimising the use of resources on a computing infrastructure (1), the computing infrastructure (1) including one or more computing structures (3) hosting a plurality of application building blocks (2a, 2b, 2c, 2d), said device including:
- a storage module (10) able to store a plurality of repositories including:
∘ a management capacity repository (11) configured to store at least two time periods associated with different resource requirements,
∘ an application profile repository (12) configured to store data for identifying the computing structure(s) (3) used by an application building block and a piece of data corresponding to a criticity indicator of said application building block,
∘ a computing infrastructure repository (13) configured to store characteristics of server resources for at least one computing structure (3) of the computing infrastructure (1), said characteristics of server resources including a piece of data of evolution rules as well as a piece of data corresponding to an evolution complexity indicator,
∘ an available resource repository (14) configured to store characteristics of available resources, said characteristics of available resources including available amount data as well as a piece of data corresponding to a complexity indicator for making the resource available, and
∘ an execution rule repository (15) configured to store data corresponding to maximum resource use levels;
- a load planning module (20) able to calculate, for a time period, from the data of the management capacity repository (11) and the application profile repository (12), levels of resources required;
- a module (30) for selecting computing structures configured to, from the required resource levels calculated and data of the computing infrastructure repository (13) and from the available resource repository (14), select computing structures (3) required for the time period; and
- an optimisation module (40) configured to generate, from the selection of computing structures (3) required for the time period and data of the execution rule repository (15), at least one placement plan including data of computing structures (3) to be used and at least one evolution plan listing modifications of resources to be made.

2. The device according to claim 1, **characterised in that** it further includes a plan catalogue configured to store a plurality of placement and/or evolution plans.

3. The device according to one of claims 1 or 2, **characterised in that** the time periods stored by the repository (11) can be **characterised by** differences in the operating characteristics of the application building blocks (2a, 2b, 2c, 2d) such as: a volume of data to be processed, resources consumed by the application building blocks.

4. The device according to any of claims 1 to 3, **characterised in that** the management capacity repository (11) further includes a piece of data corresponding to a reliability coefficient of the resource requirements.

5. The device according to claim 4, **characterised in that** said piece of data corresponding to a reliability coefficient of the resource requirements is representative of the reliability of forecasts as a function of the behaviour in the previous periods and/or human forecasts for future periods.

6. The device according to any of claims 1 to 5, **characterised in that** the piece of data of evolution rules is selected from the minimum of the resource, the maximum of the resource and/or the evolution pitch of the resource.

7. The device according to any of claims 1 to 6, **characterised in that** the computing infrastructure repository (13) is able to update characteristics of server resources after modifying at least one resource of the computing structure(s) (3).

8. The device according to any of claims 1 to 7, **characterised in that** the available resource repository (14) further includes a piece of data corresponding to a compatibility indicator.

9. The device according to any of claims 1 to 8, **characterised in that** the module (30) for selecting computing structures is configured to further generate a list of resources required for the time period especially from data corresponding to resource use levels on the computing structures (3), over the current period.

10. The device according to any of claims 1 to 9, **characterised in that** the module (30) for selecting computing structures is configured to select, as a priority, the computing structures (3) used over the current period.

11. The device according to any of claims 1 to 10, **characterised in that** the optimisation module (40) is configured to generate at least one placement plan having resource consumptions homogenised between different infrastructure servers.

12. The device according to any of claims 1 to 11, **characterised in that** the optimisation module (40) is configured to generate a plurality of placement plans and evolution plans and to select one placement plan and one evolution plan.

13. The device according to any of claims 1 to 12, **characterised in that** the optimisation module (40) is configured to generate at least one placement plan such that the computing structures (3) have resource consumptions homogenised between different computing structures (3).

14. A method (200) for optimising the use of resources of a computing infrastructure (1), said method being implemented by an optimisation device according to any of claims 1 to 13, and said method including the following steps of:
- calculating (220), by the load planning module (20), resource levels required for a time period, from data of the management capacity repository (11) and the application profile repository (12);
- selecting (230), by a module (20) for selecting computing structures, computing structures (3) required for the time period, from the required resource levels calculated and data of the computing infrastructure repository (13) and available resource repository (14);
- generating (240), by an optimisation module (40), at least one placement plan including data of computing structures (3) to be used and at least one evolution plan listing the modifications of resources to be made, from the selection of computing structures and data of the execution rule repository (15).

15. The method (200) according to claim 14, **characterised in that** it further includes a step (250) of monitoring the computing infrastructure (1) so as to determine whether the execution rules are respected.
